Europäisches Patentamt

European Patent Office

Office européen des brevets

(19)

(11)  **EP 0 676 544 B1**

(12)  **EUROPÄISCHE PATENTSCHRIFT**

(45) Veröffentlichungstag und Bekanntmachung des Hinweises auf die Patenterteilung:
**01.03.2000  Patentblatt 2000/09**

(51) Int Cl.$^7$:  **F03B 1/00**

(21) Anmeldenummer: **94890067.5**

(22) Anmeldetag: **11.04.1994**

(54) **Gleichdruck-Wasserturbine**

Constant-pressure water turbine

Turbine hydraulique à action

(84) Benannte Vertragsstaaten:
**CH DE FR IT LI**

(43) Veröffentlichungstag der Anmeldung:
**11.10.1995  Patentblatt 1995/41**

(73) Patentinhaber: **Stenzel, Heinz**
**1090 Wien (AT)**

(72) Erfinder: **Stenzel, Heinz**
**1090 Wien (AT)**

(56) Entgegenhaltungen:
WO-A-88/06239          DE-A- 3 602 083
FR-A- 652 153          US-A- 1 713 977

• L.QUANTZ 'Wasserkraftmaschinen' 1954 , SPRINGER-VERLAG , BERLIN * Seite 39 - Seite 30 * * Seite 38; Abbildungen 53-54 *

**Beschreibung**

Die Erfindung betrifft eine Gleichdruck-Wasserturbine mit großem Schluckvermögen für kleine Fallhöhen, mit einem Leitapparat und einem in einem Festlager drehbar gelagerten Laufrad und mit einem konzentrisch zur Laufradachse angeordneten, in Richtung der Laufradachse beweglichen Ventilsitz, der zur Erzielung des gewünschten Treibstrahlquerschnittes gegenüber einem feststehenden, mit dem Lagerkörper des Festlagers des Laufrades verbundenen Ventil gehoben oder gesenkt werden kann. Bei einer Gleichdruckwasserturbine dieser Art ist es bekannt, den Leitapparat mit starren Schaufeln auszubilden und ein Regelorgan, das nach Art eines Tellerventiles ausgebildet und konzentrisch zur Turbinenachse angeordnet ist, dem Leitapparat nachzuschalten (WO 88/06239). Dieses Regelorgan ist sohin am Ende der Leitradkanäle angeordnet und dient ausschließlich dazu, den Austrittsquerschnitt aus dem Leitrad zu verändern. Durch das am Ende des starren Leitapparates angeordnete Regelorgan wird die Abströmgeschwindigkeit aus dem Leitrad (= Zuströmgeschwindigkeit zum Laufrad) mit zunehmender Verkleinerung des Austrittsquerschnittes aus dem Leitapparat kleiner, die Geschwindigkeit am Austrittsquerschnitt erhöht sich jedoch etwas. Damit verändert sich auch der resultierende Winkel im Sinne einer Verkleinerung der Ablenkung im Laufraddrehsinn, was auch zu einer Änderung der Drehzahl führt.

Aufgabe der Erfindung ist es, eine Gleichdruck-Wasserturbine der eingangs erwähnten Art so auszugestalten, daß bei Änderung des Austrittsquerschnittes aus dem Leitapparat, die durch das Regelorgan erfolgt, es zu keiner Änderung der Drehzahl kommt. Erreicht wird dies gemäß der Erfindung dadurch, daß der bewegliche Ventilsitz vor dem Eintritt in den Leitapparat angeordnet ist, wenn dieser als Leitrad mit feststehenden Schaufeln ausgebildet ist, oder nach dem Leitapparat, wenn dieser als ein, in Abhängigkeit vom Hub des beweglichen Ventilsitzes verstellbarer Drallapparat, z.B. als Leitrad mit verstellbaren Leitradschaufeln, ausgebildet ist und in allen Hubstellungen des beweglichen Ventilsitzes, der Treibstrahl am Eintrittsradius des Laufrades einen konstant vorgegebenen Stromlinienwinkel mit der Tangente an den Eintrittsradius des Laufrades einschließt, wodurch die Drehzahl für alle Hubstellungen des beweglichen Ventilsitzes konstant ist. Bei der erfindungsgemäßen Turbine wird die Schluckfähigkeit durch Vollbeaufschlagung des Laufrades in maximalem Maße erhöht, wobei der trommelförmige Läufer in radialer Richtung in vollem Umfang beströmt wird. Dadurch wird auch der Nachteil bekannter Freistrahlturbinen, nämlich deren kleine Einheitsdrehzahl zusammen mit einer geringen Schluckfähigkeit vermieden, welcher Gleichdruckturbinen für kleine Fallhöhen ausgeschlossen hat, was insoferne unerwünscht ist, als diese Turbinenart

a) den geringsten Wirkungsgradverlust beim Abregeln aufweist,
b) für die Mengenregelung den geringsten technischen Aufwand beansprucht,
c) keine Kavitationsprobleme hat,
d) den baulichen Aufwand für den Unterwasserbau vermeidet,
e) keinen Axialschub verursacht.

Bei Peltonrädern ist die Vergrößerung der Teilbeaufschlagung bekanntlich mit vier bis höchstens fünf tangentialen Düsen wegen der sonst stattfindenden Strahlkollision beschränkt, zumal jeder Strahl einen bestimmten Sektor des Laufrades beansprucht.

Bei der Beströmung des Laufrades von innen nach außen, also zentrifugal, würden die Treibstrahle divergent laufen und somit niemals kollidieren können. Bei der gedanklichen Erhöhung der Anzahl der radialen Strahle auf unendlich resultiert daraus eine ebene, zentrale Quellströmung. Diese wird erfindungsgemäß mit Hilfe eines Tellerventiles mit dem Durchmesser $D_v$ bewerkstelligt, welches axial beströmt wird und welches mit dem Ventilhub h einen ringförmigen Ausströmquerschnitt von $D_v.\pi.h$ bildet, aus dem das Treibwasser mit der Geschwindigkeit

$$c_1 = \eta \sqrt{2 \times g \times H_n}$$

in radialer Richtung austritt (mit $H_n$ = Nettofallhöhe $\eta_D$ = Düsenwirkungsgrad, der die Strömungsverluste beim Durchströmen des ringförmigen Austrittsquerschnittes berücksichtigt).

Mittels eines dem Tellerventil in Strömungsrichtung folgenden konzentrischen Leitrades wird die zunächst rein radiale und zur Umfangsrichtung normale Strömung im Sinne der Drehrichtung des Laufrades abgelenkt. Der Strömungsrichtungswinkel $\alpha$ zur Umfangrichtung wird damit verkleinert und es resultiert eine Komponente von $U_1 = c_1.\cos\alpha$ in Umfangsrichtung und eine von $c_1.\sin\alpha$ in radialer Richtung. Der ebenen radialen Quellströmung wird damit ein Rotor in Laufraddrehrichtung superponiert und es resultiert eine Wirbelquelle.

Für $\alpha$ = O entsteht eine rein tangentiale Strömung, was die Verhältnisse bei der Peltonturbine wiedergibt.

Mit wachsendem $\alpha$ wird der Vordrall des Strömungsmittels kleiner. Damit wird unter der Annahme der vollkommenen Abarbeitung der tangentialen Strömungsenergie das Drehmoment der Turbine kleiner. Unter der weiteren Annahme gleicher Leistung muß daher die Drehzahl der Turbine in gleichem Maße steigen.

Umfangsgeschwindigkeit $u_1$

$$P_{Wasser} = P_{rad}$$

$$P_{Wasser} = Q \cdot H \text{ (Q.... Wassermenge, H.... Fallhöhe)}$$

$$P_{rad} = J_{tang} \cdot u1 \text{ (} J_{tang} \text{ .....Tangentialimpuls)}$$

$$J_{tang} = Q/g \cdot c_1 \cdot \cos\alpha \text{ (g = Erdbeschleunigung)}$$

$$c_1^2 = 2gH$$

$$Q \times H = Q/g \times c_1 \times \cos\alpha \times u_1$$

daraus folgt:

$$u_1 = \frac{g \times H}{c_1 \times \cos\alpha} = \frac{2 \times g \times H}{2 \times c_1 \times \cos\alpha} = \frac{c_1^2}{c_{1 \times 2 \times \cos\alpha}} = \frac{c_1}{2 \times \cos\alpha}$$

$$u_1 = c_1/2 \cdot \cos\alpha$$

Drehzahl n:

$$n^{(1/min.)} = 84{,}6 \cdot k_{u1} \cdot H_n^{1/2}/D_i \cdot \cos\alpha \text{ (} k_{v1} = 0{,}44 - 0{,}49\text{)}$$

in praxi ($k_{u1}$ etwa 0,47)

$$n^{(l/min.)} = \frac{40 \times \sqrt{H_n}}{D_i \times \cos\alpha}$$

Der Eintrittswinkel der Laufradschaufel errechnet sich mit der Forderung nach stoßfreier Anströmung wie folgt:

Die Zuströmung aus dem Leitrad mit dem Winkel $\alpha$ gegen die Tangente, zerlegt in Radial- und Tangentialkomponente ergibt:

Radialkomp. = $c_1 \cdot \sin\alpha$
Tangentialkomp. = $c_1 \cos\alpha$

Die Differenz aus u und Tangentialkomponente des Treibstrahles ergibt die Relativgeschwindigkeit zwischen Treibstrahl und Turbinenrad in Tangentenrichtung. Der Quotient aus der Radialkomponente des Treibstrahles und der obgenannten Relativgeschwindigkeit ist der Tangens des Winkels $\beta$ zwischen Laufschaufeleintrittskante und der Tangente.

Somit ist

$$tg\beta = \cfrac{c_1 \times \sin\alpha}{\cfrac{c_1}{2 \times \cos\alpha} - c_1 \times \cos\alpha} = \frac{2 \times \sin\alpha \times \cos\alpha}{1 - 2 \times \cos^2\alpha} = \frac{\sin2\alpha}{1 - 2 \times \cos^2\alpha} = \frac{\sin2\alpha}{-\cos2\alpha} = -tg2\alpha$$

$$tg\beta = -tg2\alpha \qquad \beta = 180 - 2\alpha = 2.(90 - \alpha)$$

Der Winkel zwischen Laufschaufeleintrittskante und Radtangente ist doppelt so groß wie der Komplementärwinkel von $\alpha$.

Der Austrittswinkel $\gamma$ liegt zwischen der tangentialen Komponente $u_{außen}$ und der gleichgroßen Austrittsgeschwindigkeitskomponente aus der Laufschaufel. Dieses gleichschenkelige Geschwindketsdreieck wird mit der Abströmgeschwindigkeitskomponente $c_2$ geschlossen (Fig. 4).

Aus Fig. 4 geht hervor:

$$\sin\frac{\gamma}{2} = \frac{\frac{c_2}{2}}{u_{außen}} \qquad\qquad (\eta_{ab.} = 1 - k \times c_2^2)$$

$$c_2 = c_1 \times \sqrt{1 - \eta_{ab}}$$

$$u_{außen} = \frac{D_a}{D_i} \times u_1$$

$$\sin\frac{\gamma}{2} = \sqrt{1 - \eta_{ab}} \times \cos\alpha \times \frac{D_i}{Da} \qquad u_{außen} = \frac{D_a \times c_1}{D_i \times 2 \times \cos\alpha}$$

z.B.: $\alpha = 60°$, $D_i/D_a = 0{,}75$ und $\eta_{abst.} = 0{,}96$ wird

$\sin(\gamma/2) = 0{,}75 \times 0{,}5 \times 0{,}2 = 0{,}15$

$\gamma = 8{,}6$

Die Erfindung wird anhand eines Ausführungsbeispieles näher erläutert.

Dabei zeigt

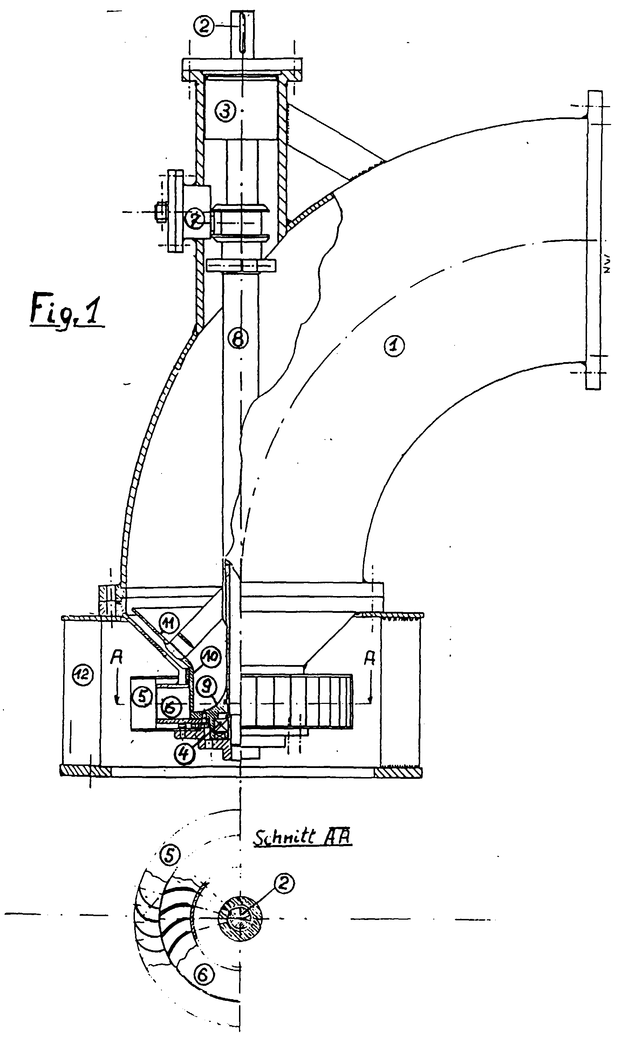

Fig. 1 eine erfindungsgemäß ausgestaltete Turbine im Aufriß, teilweise geschnitten und einen Schnitt entlang der Linie AA,

Fig. 2 einen vergrößerten Schnitt durch Lauf- und Leitrad,

Fig. 3 ein vektorielles Geschwindigkeitsdreieck zur Bestimmung des Laufschaufeleinströmwinkels und

Fig. 4 ein vektorielles Geschwindigkeitsdreieck zur Bestimmung des Schaufelaustrittswinkels $\gamma$.

Ein Turbinenlaufrad 5 ist mit seiner Welle 2 im Festlager 4 in einem Loslager 3 geführt. Der Lagerkörper des Festlagers 4 bildet an seiner Außenseite ein feststehendes Ventil 9. Der in Achsrichtung bewegliche Ventilsitz 10 steht in fester Verbindung mit dem Einlauftrichter 11 und mit einem Verstellrohr 8 und wird über eine Verstellwelle 15 und einen Exzenter 7 gehoben oder gesenkt, um den gewünschten Treibstrahlquerschnitt zu erzielen. Das durch einen Krümmer 1 eintretende Treibwasser gelangt über den Einlauftrichter 11, wo es in einem bestimmten Maße vorbeschleunigt wird, zu einem Ringspalt zwischen dem Ventil 9 und dem Ventilsitz 10, wo es seine Austrittsgeschwindigkeit $c_1$ in radialer Richtung erhält. Das Leitrad 6 erteilt dem Treibstrahl eine tangentiale Komponente. Nach dem Leitrad tritt das Treibwasser zunächst reaktionsfrei in das Laufrad 5 ein, wo es arbeitsleistend sowohl seine tangentiale Komponente abbaut, als auch die Radialkomponente bis auf die Abströmgeschwindigkeit $c_2$ verringert und durch ein Schutzgitter 12 in das Unterwasser abfließt.

Die Turbinenschaufeln fungieren als reine Ablenkflächen, daher tritt keine Druckänderung auf, was dem Prinzip der Gleichdruckturbine entspricht.

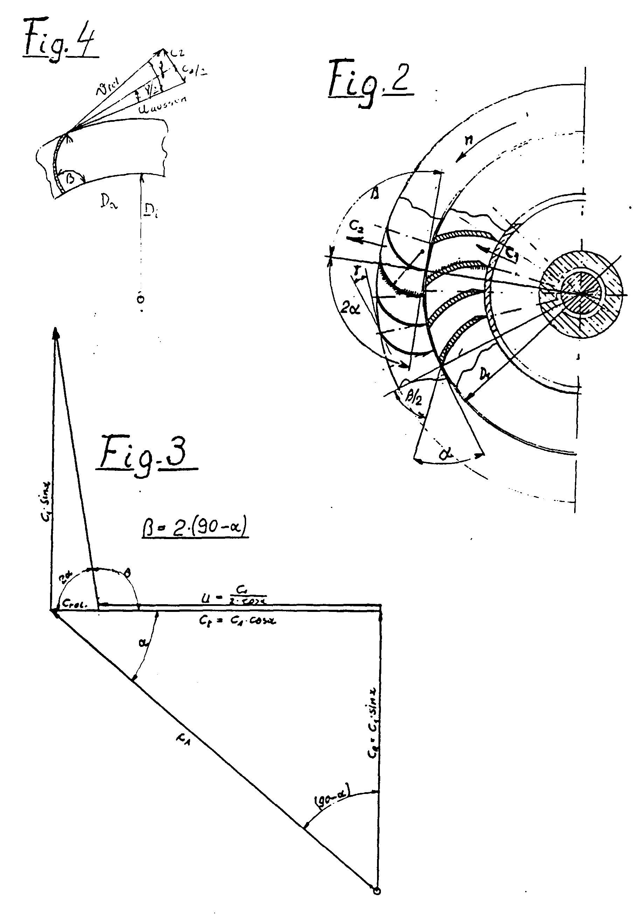

Fig. 2 zeigt den gesetzmäßigen Zusammenhang von Abströmwinkel $\alpha$ aus dem Leitrad 6 und dem Anströmwinkel $\beta$ der Laufschaufel.

Fig. 3 zeigt die vektorielle Zusammensetzung der Umfangsgeschwindigkeit und der radialen sowie der tangentialen Komponenten der Strahlgeschwindigkeit zum Zwecke der Ermittlung von $\beta$, der Richtung der Laufschaufeleintrittskante.

Das zur Bildung der Wirbelquelle verwendete Leitrad kann auch durch einen Drallapparat ersetzt werden, der vor dem Ventil liegt und der in Abhängigkeit vom Ventilhub so verstellt werden muß, daß der Strahlwinkel konstant bleibt. Diese Komplikation kann dann gerechtfertigt sein, wenn zum Zwecke der Drehzahlerhöhung durch den Wegfall des Leitrades, das Laufrad verkleinert werden soll.

Die solcherart erzielbare Drehzahlsteigerung der Turbine liegt in der Größenordnung von etwa 35 %.

**Patentansprüche**

1. Gleichdruck-Wasserturbine mit großem Schluckvermögen für kleine Fallhöhen, mit einem Leitapparat und einem in einem Festlager drehbar gelagerten Laufrad und mit einem konzentrisch zur Laufradachse angeordneten, in Richtung der Laufradachse beweglichen Ventilsitz, der zur Erzielung des gewünschten Treibstrahlquerschnittes gegenüber einem feststehenden, mit dem Lagerkörper des Festlagers des Laufrades verbundenen Ventil gehoben oder gesenkt werden kann, dadurch gekennzeichnet, daß der bewegliche Ventilsitz (10) vor dem Eintritt in den Leitapparat angeordnet ist, wenn dieser als Leitrad mit feststehenden Schaufeln ausgebildet ist, oder nach dem Leitapparat, wenn dieser als ein, in Abhängigkeit vom Hub des beweglichen Ventilsitzes (10) verstellbarer Drallapparat, z.B. als Leitrad mit verstellbaren Leitradschaufeln, ausgebildet ist und in allen Hubstellungen des beweglichen Ventilsitzes (10), der Treibstrahl am Eintrittsradius des Laufrades einen konstant vorgegebenen Stromlinienwinkel ($\alpha$) mit der Tangente an den Eintrittsradius des Laufrades einschließt, wodurch die Drehzahl für alle Hubstellungen des beweglichen Ventilsitzes (10) konstant ist.

**Claims**

1. An action water turbine with large absorption capacity for low head, with a guide wheel and a blade wheel pivoted in a fixed bearing, and with a valve seat which is positioned concentrical to and movable in the direction of the running shaft and which, in order to obtain the required propelling jet cross section, can be raised or lowered in relation to a stationary valve connected with the bearing housing of the fixed bearing of the blade wheel, characterized by the movable valve seat (10) being positioned before the guide wheel intake in the event of this latter being designed as a guide wheel with fixed blades, or after the guide wheel in the event of this latter being designed as a spin device adjustable depending on the lift of the movable valve seat (10), e.g. as a guide wheel with adjustable blades, and the propelling jet at the intake radius of the blade wheel forming a constant given streamline angle ($\alpha$) with the tangent at the intake radius of the blade wheel in every valve lift position of the movable valve seat (10), so that the turbine spin for any valve lift position of the movable valve seat (10) is constant.

**Revendications**

1. Turbine hydraulique à pression continue d'une grande capacité d'absorption pour des petites hauteurs de chute, avec dispositif de guidage et une roue à aubes tournant dans un palier fixe et un siège de soupape mobile en direction de l'axe de la roue à aubes en disposition concentrique par rapport a celle-ci, permettant d'être monté ou descendu, en comparaison avec une soupape fermement attachée au corps du palier fixe de la roue à aubes, à fin d'obtenir la coupe désirée du jet de propulsion, caractérisé par l'arrangement du siège de soupape mobile (10), qui se trouve devant l'entrée dans le dispositif de guidage quand celui-ci se compose d'une roue conductrice à aubes fixes, ou après le dispositif de guidage quand celui-ci est construit de façon d'un appareil de torsion réglable en fonction de la course du siège de soupape mobile, par exemple comme roue conductrice avec aubes à position réglable, assurant un fonctionnement continu à l'angle de ligne de courant exigé ($\alpha$) du jet de propulsion par rapport à la tangente au radius d'entrée de la roue à aubes dans toutes les positions de la course du siège de soupape fixe (10).

Fig. 1

Schnitt AA

*Fig.4*

*Fig.2*

*Fig.3*

$$\beta = 2 \cdot (90 - \alpha)$$